# EUROPÄISCHE PATENTSCHRIFT

(11) **EP 2 242 607 B1**
(45) Veröffentlichungstag und Bekanntmachung des Hinweises auf die Patenterteilung: **14.08.2013**
(21) Anmeldenummer: 09705864.8
(22) Anmeldetag: 30.01.2009
(51) Int. Cl.: B23K 26/24, B23K 26/42, B23K 37/04

(54) **VERFAHREN ZUM FÜGEN VON BAUTEILEN**
METHOD FOR JOINING COMPONENTS
PROCÉDÉ POUR L'ASSEMBLAGE DE PIÈCES

(30) Priorität: 30.01.2008 AT 1422008
(43) Veröffentlichungstag der Anmeldung: 27.10.2010
(73) Patentinhaber: STIWA Holding GmbH, 4800 Attnang-Puchheim (AT)
(72) Erfinder: HEIML, Roland, A-4870 Vöcklamarkt (AT)
(74) Vertreter: Burger, Hannes
(86) Internationale Anmeldenummer: PCT/AT2009/000031
(87) Internationale Veröffentlichungsnummer: WO 2009/094682

(56) Entgegenhaltungen:
- EP-A- 0 636 446
- WO-A-2004/007139
- JP-A- 2003 080 393
- JP-A- 2004 009 109
- US-A1- 2001 019 074
- US-A1- 2006 213 878

## Beschreibung

Die Erfindung bezieht sich auf ein Verfahren zum Fügen, insbesondere Laserschweißen, von zwei Bauteilen, wie dies im Anspruch 1 beschrieben wird.

Aus der DE 102 06 887 A1 bzw. B4 ist ein Verfahren zum Laserschweißen von Blechformteilen mit Schweißflanschen, insbesondere von Karosserieteilen von Fahrzeugen, bekannt geworden. Die zu verbindenden Blechformteile werden flanschfrei gespannt und dabei die Spannung lage- und kraftgeregelt in Abhängigkeit vom Soll/Ist-Wert-Vergleich der Maße und/oder der Oberflächen des geschweißten Blechformteils durchgeführt. Im Zuge des Schweißvorganges werden die Schweißflansche an der Schweißstelle wandernd aneinander gepresst und in dem gespannten Abschnitt fortlaufend oder absatzweise verschweißt. Dadurch kann auf die Anordnung von festen Spannvorrichtungen im Bereich der Schweißflansche verzichtet werden und es wird der mit sehr schnellen Vorschüben ausgeführte Laserschweißvorgang nicht behindert. Durch die lage- und/oder kraftgeregelte Spannung der Blechformteile in Abhängigkeit vom Soll/Ist-Wert-Vergleich der Maße und/oder der Oberfläche ergibt sich die Möglichkeit, Ungenauigkeiten der Blechformteile zu korrigieren. Auf diese Weise werden maßhaltige Karosserien und Karosserieteile für Fahrzeuge hergestellt, die deren weitere Verarbeitung zum fertig gestellten Kraftfahrzeug wesentlich verbessern.

Aus der DE 198 28 235 A1 ist eine Rohbauschweißvorrichtung zur Herstellung von Kraftfahrzeugkarosserien bekannt geworden. Diese Rohbauschweißvorrichtung besteht aus auf einer Grundplatte angeordneten Spannern, Schwenken, Zentrierbolzen und Auflagen, die Formenelemente zur Aufnahme entsprechender Karosserieteilkonturen aufweisen. Um den Zeitaufwand für den Wechsel der Ausführungsvarianten der unterschiedlichen Karosserien und den Platzbedarf für die Lagerung der Grundplatten zu verringern, werden auf der Grundplatte der Rohbauschweißvorrichtung eine oder mehrere segmentartig ausgebildete Zwischenplatten angeordnet. Die Zwischenplatten tragen für die Fertigung von mehreren Ausführungsvarianten einer Karosseriegröße die den einzelnen Karosserieformen zugeordneten Karosserieteilfixierungen. Weiters sind die Zwischenplatten schnell wechselbar mit der Grundplatte und untereinander verbunden.

Weiters ist es hinlänglich bekannt, einzelne Bauteile zuerst miteinander zu fügen und nach dem Fügen eine oder mehrere Funktionsflächen lage- und positionsgenau an den gefügten Bauteilen herzustellen. Dies erfordert nach dem Fügevorgang weitere Arbeitsschritte und ist damit arbeits- und kostenintensiv.

Aus der US-A-2006 0213 878 ist en Verfahren zum Laserschweißen bekannt, wobei die Bauteile während des Schweißens relativ zueinander beugt werden. Der vorliegenden Erfindung liegt die Aufgabe zugrunde, ein Verfahren zum Fügen von Bau teilen anzugeben, bei welchem trotz dem durchgeführten Fügevorgang eine hohe Maßgenauigkeit zwischen den an den Bauteilen angeordneten Funktionsflächen erreicht werden kann.

Diese Aufgabe der Erfindung wird dadurch die gelöst, dass zunächst ein Lagemerkmal zwischen den an den Bauteilen ausgebildeten Funktionsflächen unter Berücksichtigung eines Fügeparameters als Sollwert definiert wird und danach ein Fügespalt zwischen den einander zugewendeten Fügeflächen der zu fügenden Bauteile in Abhängigkeit des Lagemerkmals eingestellt wird, sodass der Sollwert des Lagemerkmals nach dem Beenden des Fügevorganges erreicht wird.

Der sich durch die Merkmale des Kennzeichenteiles des Anspruches 1 ergebende überraschende Vorteil liegt darin, dass bei einem derartigen Vorgehen bereits vor dem Fügevorgang an den zu fügenden Bauteilen die jeweiligen Funktionsflächen zumindest in Abschnitten überwiegend endfertig bezüglich ihrer Oberflächengüte hergestellt werden können und damit nach dem Fügevorgang eine Nacharbeit zum größten Teil bzw. überhaupt vermieden wird. Dazu sind die Fügeparameter entsprechend zu berücksichtigen, welche beim Fügen zu einer Lageveränderung der Funktionsflächen an den Bauteilen führen. Aufgrund der ermittelten bzw. bekannten Fügeparameter werden die zum Fügen vorgesehenen Fügeflächen unter Berücksichtigung eines Fügespaltes zueinander positioniert ausgerichtet und in dieser Stellung der Fügevorgang durchgeführt. Nach Beendigung des Fügevorganges wird dann der Sollwert des Lagemerkmals zwischen den zueinander in Bezug stehenden Funktionsflächen erreicht. Damit wird eine Nachbearbeitung der Funktionsflächen zur Erzielung der Lagemerkmale nahezu bis vollständig vermieden. Dadurch werden Baueinheiten aus einzelnen Bauelementen bzw. Bauteilen geschaffen, welche voneinander getrennt überwiegend bis vollständig endfertig bearbeitet werden können und nach dem Fügevorgang ansonst übliche Nachbearbeitungsvorgänge nahezu bis überhaupt vermieden werden. Durch das Einstellen des Fügespaltes kann darüber hinaus in gewissen Grenzen eine Korrektur von Fertigungsungenauigkeiten ausgeglichen werden, wodurch trotzdem nach Beenden des Fügevorganges der oder die entsprechenden Sollwerte des oder der Lagemerkmale erfüllt werden.

Vorteilhaft ist bei den im Anspruch 2 gewählten Verfahrensschritten, dass so zuerst die Fügeflächen am Bauteil ausgewählt bzw. bearbeitet werden und anschließend in Abhängigkeit von diesen erst die Bearbeitung und Anordnung der Funktionsflächen erfolgt. Damit kann ein vordefinierter Fügespalt zwischen den Bauteilen festgelegt werden, um so eine einwandfreie Verbindung der beiden Bauteile unter Einhaltung der Lagemerkmale zu erreichen.

Weiters ist ein Vorgehen gemäß den im Anspruch 3 angegebenen Merkmalen vorteilhaft, weil es dadurch möglich wird, zuerst die Funktionsfläche am jeweiligen Bauteil ordnungsgemäß anzuordnen und zu bearbeiten und erst anschließend daran unter Berücksichtigung der geometrischen Anordnung dieser Funktionsfläche die jeweilige Fügefläche am Bauteil auszubilden. Dadurch wird eine noch bessere Korrekturmöglichkeit von Fertigungsungenauigkeiten ermöglicht und damit die Herstellung von hoch präzisen Baueinheiten ermöglicht.

Eine weitere vorteilhafte Vorgehensweise ist im Anspruch 4 beschrieben, wodurch in Abhängigkeit von der Spaltbreite eine ausreichende Korrekturmöglichkeit zur gegenseitigen Vorpositionierung der zu fügenden Bauteile geschaffen wird. Damit können Fertigungsungenauigkeiten noch besser ausgeglichen werden.

Vorteilhaft ist auch eine Verfahrensvariante gemäß Anspruch 5, weil so für den Fügevorgang eine exakte gegenseitige Ausrichtung der zu fügenden Bauteile ermöglicht wird und dadurch eine sichere Einhaltung der Lagemerkmale nach Beenden des Fügevorganges erzielt wird.

Vorteilhaft ist bei den im Anspruch 6 gewählten Verfahrensschritten, dass dadurch eine laufende Kontrolle des Fügevorganges bezüglich der eingehaltenen Spaltbreite erfolgt und so rasch auf Abweichungen mit entsprechenden Korrekturmaßnahmen reagiert werden kann. Damit werden nicht nur hoch präzise Baueinheiten geschaffen, sondern auch der Ausschuss reduziert bzw. überhaupt vermieden.

Weiters ist ein Vorgehen gemäß den im Anspruch 7 angegebenen Merkmalen vorteilhaft, weil dadurch noch besser auf den oder die Fügeparameter Rücksicht genommen werden kann und so beispielsweise ein größerer Verzug von einzelnen Bauteilen mit berücksichtigt werden kann, welcher während dem Fügevorgang durch die Temperatureinwirkung bewirkt wird.

Eine weitere vorteilhafte Vorgehensweise ist im Anspruch 8 beschrieben, wodurch so ein möglichst großer Schweißverzug über die durchgeführte Verbindungslänge zwischen den Bauteilen ausgeglichen werden kann.

Vorteilhaft ist auch eine Verfahrensvariante gemäß Anspruch 9, weil dadurch bereits vor dem Fügevorgang mögliche fehlerhafte bzw. ungenaue Teile ausgeschieden werden können und gleichzeitig dabei die erfasste Geometrie für den nachfolgenden Spann- sowie Ausrichtvorgang mit berücksichtigt werden kann.

Vorteilhaft ist bei den im Anspruch 10 gewählten Verfahrensschritten, dass durch die geometrische Erfassung der zu fügenden Bauteile so die zur Verfügung stehende Spaltbreite exakt ermittelt werden kann und aufgrund dieser die für den Fügevorgang notwendigen Schweißparameter vorbestimmt und festgelegt werden können.

Weiters ist ein Vorgehen gemäß den im Anspruch 11 angegebenen Merkmalen vorteilhaft, weil so eine exakte Vorpositionierung der zu fügenden Bauteile ermöglicht wird und zusätzlich noch durch die Spannparameter eine noch bessere gegenseitige Vorpositionierung zur Erzielung hoch präziser Lagemerkmale ermöglicht wird.

Eine weitere vorteilhafte Vorgehensweise ist im Anspruch 12 beschrieben, wodurch aufgrund der unterschiedlichen Ermittlungsverfahren die durch den Fügevorgang hervor gerufenen Verformungen bereits im Vorfeld ermittelt werden können. So wird eine bewusste lagemäßige Fehlanordnung der Funktionsflächen an den Bauteilen durchgeführt, welche jedoch nach Beenden des Fügevorganges hin zum richtigen Lagemerkmal ausgeglichen wird.

Vorteilhaft ist auch eine Verfahrensvariante gemäß Anspruch 13, weil so dem Schweißverzug durch einen bewussten inneren Spannungsaufbau entgegengewirkt werden kann und so nach dem Beenden des Fügevorganges eine Verbesserung erreicht bzw. eine überwiegend nahezu spannungsfreie Baueinheit geschaffen werden kann.

Eine weitere vorteilhafte Vorgehensweise ist im Anspruch 14 beschrieben, wodurch eine Qualitätskontrolle der hergestellten Baueinheit ermöglicht wird und dadurch nicht nur eine hohe Genauigkeit, sondern auch Ausschuss vermieden wird.

Schließlich ist eine vorteilhafte Verfahrensvariante im Anspruch 15 beschrieben. Dadurch kann unmittelbar noch während des Fügevorganges ein entsprechender Korrekturvorgang durchgeführt werden. Dadurch wird die Produktion von Ausschuss nahezu bzw. vollständig verhindert.

Die Erfindung wird im nachfolgenden anhand der in den Zeichnungen dargestellten Ausführungsbeispiele näher erläutert.

Es zeigen:
- Fig. 1: zwei miteinander nach dem erfindungsgemäßen Verfahren gefügte Bauteile, in Ansicht geschnitten, gemäß den Linien I-I in Fig. 2;
- Fig. 2: die Bauteile nach Fig. 1 in Draufsicht, teilweise geschnitten;
- Fig. 3: zwei weitere miteinander nach dem erfindungsgemäßen Verfahren zu fügende Bauteile, in Ansicht und schematisch vereinfachter Darstellung;
- Fig. 4: zwei andere miteinander nach dem erfindungsgemäßen Verfahren zu fügenden Bauteile, in Ansicht und schematisch vereinfachter Darstellung;
- Fig. 5: zwei weitere miteinander nach dem erfindungsgemäßen Verfahren zu fügende Bauteile, in Ansicht und schematisch vereinfachter Darstellung;
- Fig. 6: eine andere Anordnung von miteinander nach dem erfindungsgemäßen Verfahren gefügten Bauteilen, in Ansicht und schematisch vereinfachter Darstellung;
- Fig. 7: eine stark vereinfachte Darstellung einer Spannvorrichtung zum gegenseitigen Halten der zu fügenden Bauteile.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

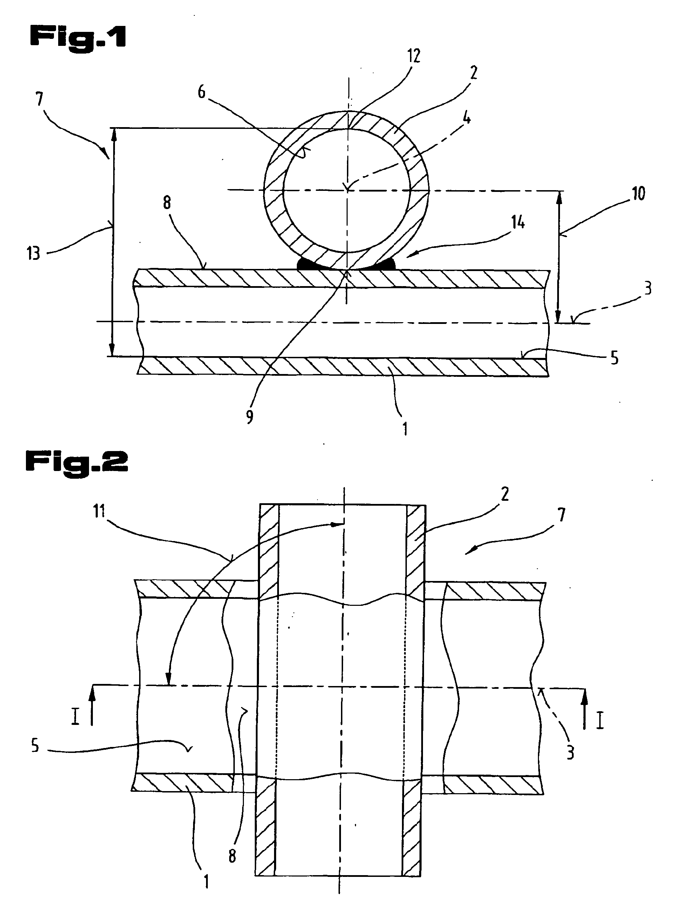

In den Fig. 1 und 2 ist eine von vielen Möglichkeiten zum thermischen Fügen, insbesondere Laserschweißen von zwei Bauteilen 1, 2 gezeigt, wobei dies nur beispielhaft für eine Vielzahl von unterschiedlichen bzw. anderen Möglichkeiten gewählt worden ist. Bei diesem hier gezeigten Ausführungsbeispiel handelt es sich bei dem ersten Bauteil 1 um einen länglichen Hohlkörper mit einem rechteckigen Querschnitt. Dieser Bauteil 1 kann auch als Rechteckrohr bezeichnet werden, wobei in dessen Längserstreckung auch eine Längsachse 3 ausgerichtet ist.

Bei dem zweiten Bauteil 2 handelt sich ebenfalls um einen Hohlkörper, jedoch mit einem kreisrunden Querschnitt. Auch dieser zweite Bauteil 2 weist in Richtung seiner Längserstreckung eine Längsachse 4 auf. An beiden Bauteilen 1, 2 sind beispielhafte Funktionsflächen 5, 6 dargestellt. Beim ersten Bauteil 1 ist die Funktionsfläche 5 jene Fläche am Bauteil, welche im Hohlraum des Bauteils 1 auf der vom zweiten Bauteil 2 abgewendeten Seite an diesem angeordnet bzw. ausgebildet ist. Im vorliegenden Ausführungsbeispiel ist dies jene

Fläche des Rechteckrohres, welche im Querschnitt die größere Seitenlänge aufweist.

Die Funktionsfläche 6 am zweiten Bauteil 2 ist die zylindrisch bzw. rohrförmig ausgebildete Innenfläche. Beide Funktionsflächen 5, 6 werden vor dem Fügevorgang zumindest bezüglich ihrer Oberflächengüte zumindest in Abschnitten überwiegend endfertig bearbeitet bzw. hergestellt. Als Oberflächengüte wird hier die Gleichförmigkeit und/oder Glätte der Werkstückoberfläche verstanden bzw. ist die Oberflächengüte durch diese bestimmt.

Die Gleichförmigkeit ist von der Bearbeitungsgenauigkeit abhängig. Dies kann beispielsweise durch die Stabilität der Werkzeugmaschine, von der Lagerung der Arbeitsspindel oder vom Ausgleich von Spannungen im Werkstück abhängen. Die Glätte hingegen ergibt sich aus der Art des gewählten Bearbeitungsvorganges der jeweiligen Oberfläche. Bei einer Bearbeitung durch einen spanabhebenden Schneidvorgang ist dies von der Art des gewählten Schneidvorganges und der Größe der Spanabnahme abhängig. Die Größe der Spanabnahme ist wiederum abhängig vom Vorschub und der gewählten Spantiefe.

Im weitesten Sinn gibt die Oberflächengüte die Beschaffenheit und den Endzustand der jeweiligen Oberfläche an. Die Beschaffenheit und der Endzustand, wie beispielsweise die zuvor beschriebene Gleichförmigkeit, kann aus der Gruppe der Angaben wie der Geradheit, Ebenheit, Rundheit, Zylinderform, Linienform, Flächenform usw. gewählt sein.

Bei der Glätte hingegen wird eine gewisse Rauheit der Oberfläche verstanden, die durch den Wert der Rautiefe (Rₜ) beispielsweise in der Einheit µm angegeben wird. Dabei ist die Rautiefe (Rₜ) der Abstand von der Grundlinie (i) zur Hülllinie (e) eines Rautiefenprofils.

Die beiden zuvor beschriebenen Funktionsflächen 5, 6 sind an den beiden Bauteilen 1 und 2 in der gewünschten Form und Qualität vor dem Fügevorgang bereits überwiegend endfertig bzw. endgültig ausgebildet. Zur gegenseitigen Verbindung der beiden Bauteile 1, 2 zu einer Baueinheit 7 werden die beiden Bauteile 1, 2 zueinander positioniert und an aneinander zugewendeten Fügeflächen 8, 9 miteinander verbunden. Dies erfolgt bei diesem Ausführungsbeispiel durch Fügen mittels Laserschweißen.

Bislang wurde eine maßliche bzw. oberflächlich gesehene Endfertigung von vorbestimmten

Oberflächen erst nach dem Fügevorgang durchgeführt. Dabei wurde ein Übermaß für die Endfertigung berücksichtigt, wobei dieses bis zu 1 mm und mehr betragen hat. Bei dem erfindungsgemäßen Verfahren werden diese Oberflächen als Funktionsflächen 4, 5 bezeichnet und in nahezu allen Fällen im Zuge des Bearbeitungsvorganges noch vor dem Fügen in der Oberflächengüte endfertig ausgebildet. Das kann beispielsweise durch Feinstanzvorgänge oder dgl. erfolgen. Eine zusätzliche Nachbearbeitung kann dann noch durch Schleifen, Polieren, Honen usw. erfolgen. Bei Bauelementen bzw. Bauteilen, bei denen hoch präzise Maßhaltigkeit gefordert wird, wird die Funktionsfläche 4, 5 oberflächlich sowie maßlich auf ein Übermaß von wenigen Zehntel mm oder aber auch Hundertstel mm, wie z.B. 0,05 mm bis 0,4 mm bearbeitet. Die präzise maßliche sowie oberflächliche Ausbildung der Funktionsfläche 4, 5 erfolgt erst nach dem Fügevorgang. Damit wird ein Nachbearbeitungsaufwand gegenüber herkömmlichen Fertigungsverfahren um 70 % bis 95 % eingespart. Bei der Fertigung von Nocken kann dies mit Vorteil angewendet werden.

Für den Fügevorgang wird zuerst zumindest ein Lagemerkmal zwischen den an den beiden Bauteilen 1, 2 ausgebildete Funktionsflächen 5, 6 unter Berücksichtigung eines Fügeparameters als Sollwert definiert. Unter Lagemerkmal kann beispielsweise ein Abstand, die Parallelität, die Winkeligkeit, die Symmetrie, die Koaxialität oder Konzentrizität, usw. verstanden werden. Auch ist eine beliebige Kombination dieser Lagemerkmale untereinander möglich.

Bei dem hier gezeigten Ausführungsbeispiel könnte eines der Lagemerkmale durch einen Abstand 10 zwischen den beiden Längsachsen 3, 4 oder aber auch durch deren Parallelität zueinander definiert sein. Ein weiteres Lagemerkmal könnte beispielsweise ein zwischen den Längsachsen 3, 4 eingeschlossener Winkel 11 sein.

Betrachtet man die zweite Funktionsfläche 6 des zweiten Bauteils 2 wird diese bezüglich der Längsachse 4 durch ein Vielzahl von Erzeugenden 12 definiert, die einerseits parallel zur Längsachse 4 verlaufen bzw. ausgerichtet sind und andererseits in der gleichen Distanz, nämlich dem Radius, dazu angeordnet sind. Als weiteres Lagemerkmal könnte beispielsweise ein Abstand 13 zwischen der hier ebenflächig ausgebildeten ersten Funktionsfläche 5 und der Erzeugenden 12 der zweiten Funktionsfläche 6 gewählt werden.

Eines oder mehrere der zuvor beschriebenen Lagemerkmale sind somit als Sollwerte unter

Berücksichtigung zumindest eines Fügeparameters für jene Qualitätsmerkmale ausgewählt, welche die beiden Funktionsflächen 5, 6 nach dem Fügen relativ zueinander einnehmen sollen.

Dieses vordefinierte Lagemerkmal gibt somit den Endzustand bzw. die endgültige relative Positionierung der beiden Funktionsflächen 5, 6 relativ zueinander an, wobei hier der Fügevorgang bereits beendet bzw. als abgeschlossen betrachtet werden muss.

Zur Erzielung des oder dieser Lagermerkmale sind jedoch verschiedenste Fügeparameter zu berücksichtigen, welche während dem Fügevorgang, wie beispielsweise dem thermischen Verbinden durch Laserschweißen, eine relative Verlagerung der beiden Funktionsflächen 5, 6 zueinander bewirken. Als häufigster dieser Fügeparameter kann hier ein gewisser Schweißverzug, eine Wärmebeeinflussung wie eine Schrumpfung, eine Maßänderung oder aber auch eine Abweichung von der Beschaffenheit und dem Endzustand, wie beispielsweise der Geradheit, Ebenheit, Rundheit, Zylinderform, Linienform und/oder Flächenform genannt werden. Diese Fügeparameter können unterschiedlichst, wie beispielsweise empirisch, durch Simulation oder unterschiedlichste Berechnungsmethoden ermittelt werden. Die Fügeparameter werden nicht nur bei der endfertigen Bearbeitung der Funktionsflächen 5, 6 berücksichtigt, sondern finden auch bei der jeweiligen Vorpositionierung der beiden Funktionsflächen 5, 6 vor dem Fügevorgang Berücksichtigung.

Als Schweißparameter zur Durchführung des Fügevorganges werden beim Laserschweißen insbesondere die Laserleistung, Polarisation, Fokusierbarkeit (Strahlqualität), Fokusdurchmesser, Fokuslage, Schweißgeschwindigkeit, das Arbeitsgas, das Schutzgas und die Art der Gas-Zuführung angesehen. Dabei ist die Laserleistung an die Stärke bzw. Dicke der miteinander zu fügenden Bauteilen 1, 2 anzupassen. Je größer die Stärke bzw. die Dicke ist, umso höher ist die zum Schweißen der Bauteile 1, 2 benötigte Laserleistungen. Mit steigenden Laserleistungen können höhere Schweißgeschwindigkeiten und größere Schweißtiefen erreicht werden. Über die Schweißgeschwindigkeit sind Schweißtiefe und Schweißnahtgeometrie beeinflussbar. Eine größere Schweißgeschwindigkeit reduziert jedoch die Schweißtiefe und führt zu einer schlankeren Nahtausbildung zwischen den beiden Fügeflächen 8, 9. Über die gewählte Geschwindigkeit des Schweißvorganges kann zusätzlich das Abkühlen der Schmelze gesteuert und damit das Gefüge der Naht positiv beeinflusst werden. Das ist besonders bei Werkstoffen wichtig, die beim Erstarren zur Aufhärtung oder verstärkten Rissbildung neigen.

Zur Erreichung bzw. Erzielung eines oder mehrerer der zuvor beschriebenen Lagemerkmale wird zwischen den einander zugewendeten Fügeflächen 8, 9 der zu fügenden Bauteile 1, 2 ein in der Fig. 1 vereinfacht dargestellter Fügespalt 14 ausgebildet bzw. eingestellt, sodass der Soll-Wert des Lagemerkmals nach dem Beenden des Fügevorganges erreicht bzw. erzielt wird. Dieser Fügespalt 14 wird bei zusatzlosem Laserschweißen, d.h. bei ausschließlicher Aufschmelzung des Grundmaterials der zu fügenden Bauteile 1, 2, in einer Größenordnung zwischen 0,0 mm und 0,2 mm gewählt. Dabei erfolgt das Schließen des Fügespaltes 14 durch einen Abtrag von Grundmaterial der zu fügenden Bauteile 1, 2 aus der Umgebung des Fügespaltes 14. Beim Laserschweißen mit Zusatzmaterial können auch Spaltbreiten des Fügespaltes 14 bis hin zu 3,0 mm und gegebenenfalls auch darüber verschweißt werden. Beim Verschweißen mit Zusatzmaterial wird das Zusatzmaterial zum Füllen des Fügespaltes 14 unter gleichzeitiger Anbindung an die zu fügenden Bauteile 1, 2 verwendet.

Mit diesem Vorgehen wird erreicht, dass vor dem Fügen der beiden Bauteile 1, 2 die jeweiligen Funktionsflächen 5, 6 an diesen soweit ausgebildet bzw. fertig gestellt werden, dass eine nach dem Fügen ansonst übliche Nachbearbeitung zur Erzielung des oder der Lagemerkmale nicht mehr notwendig ist bzw. wegfallen kann. Der Fügespalt 14 zwischen den einander zugewendeten Fügeflächen 8, 9 wird unter Berücksichtigung des oder der Fügeparameter sowie in Abhängigkeit des zu erzielenden bzw. erreichenden Lagemerkmals vorpositioniert eingestellt, wobei nach dem Beenden des Fügevorganges die jeweiligen zusammengehörigen Funktionsflächen 5, 6 bezüglich des als Sollwert vordefinierten Lagemerkmals zueinander ausgerichtet sind.

Die Herstellung und die damit verbundene geometrische bzw. räumliche Anordnung der endfertig bearbeitenden Funktionsflächen 5, 6 kann in Abhängigkeit bezüglich der geometrischen bzw. räumlichen Anordnung der jeweiligen Fügeflächen 8, 9 an den Bauteilen 1, 2 durchgeführt werden. Dies bedeutet, dass zuerst die Fügeflächen 8, 9 hergestellt bzw. bestimmt werden und anschließend erst die Bearbeitung der Funktionsflächen 5, 6 erfolgt.

Es wäre aber auch möglich, dass die jeweilige Fügefläche 8, 9 in Abhängigkeit der geometrischen bzw. räumlichen Anordnung der am Bauteil 1, 2 endfertig bearbeitenden Funktionsflächen 5, 6 hergestellt wird. Dies bedeutet, dass zuerst die endfertige Bearbeitung der Funktionsflächen 5, 6 erfolgt und anschließend erst die Bearbeitung der Fügefläche 8, 9 erfolgt.

Um eine Vorpositionierung der beiden Bauteile 1, 2 vor dem Fügevorgang zu ermöglichen, soll der Fügespalt 14 mit einer Spaltbreite ausgebildet werden, welche zumindest jenem Positionierweg entspricht, bei welchem die Funktionsflächen 5, 6 in ihrer relativen Lage zueinander vorpositioniert sind. Ausgehend von dieser vorpositionierten Lage, welche jedoch noch nicht dem zu erzielenden bzw. erreichenden Lagemerkmal entsprechen muss, wird nach dem Fügevorgang und den damit verbundenen Schweißparametern eine nachträgliche Lageveränderung der beiden Funktionsflächen 5, 6 zueinander erfolgen und erst nach Beenden des Fügevorganges das oder die vorbestimmten Lagemerkmale erreicht werden.

Weiters ist es auch noch möglich, dass die Spaltbreite des Fügespaltes 14 im Zuge des Spanvorganges der beiden Bauteile 1, 2 eingestellt wird. Darüber hinaus kann aber auch die Spaltbreite des Fügespaltes 14 im Zuge des fortschreitenden Fügevorganges laufend nacheingestellt bzw. nachjustiert werden, um so einerseits die als Soll-Werte vorbestimmten Lagemerkmalen zu erfüllen und andererseits einen gesicherten Fügevorgang zu ermöglichen.

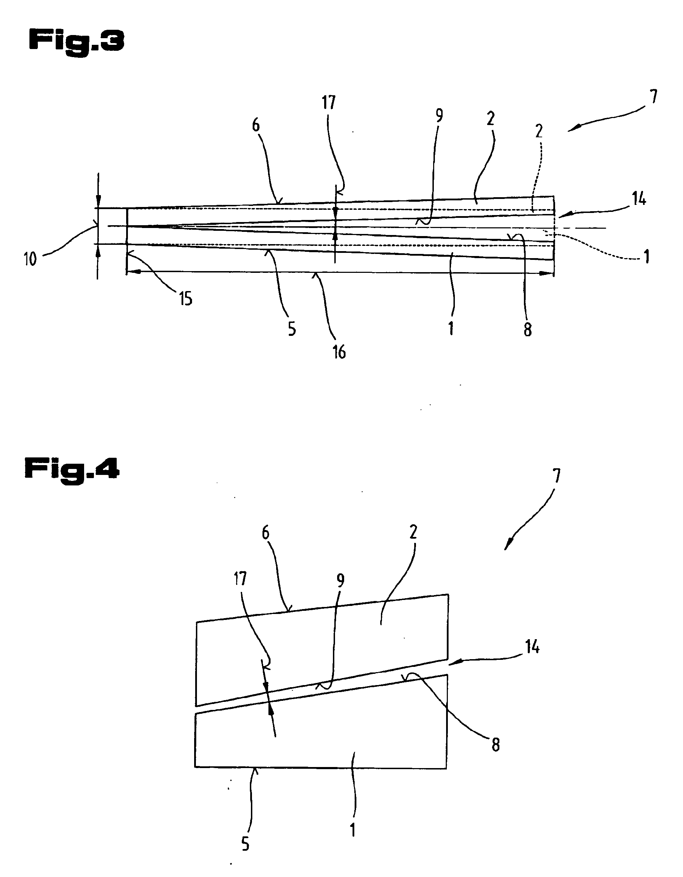

In der Fig. 3 ist eine weitere mögliche Anordnung von Bauteilen 1, 2 zur Bildung der Baueinheit 7 gezeigt, wobei wiederum für gleiche Teile gleiche Bezugszeichen bzw. Bauteilbezeichnungen wie in den vorangegangen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

Die beiden Bauteile 1 und 2 sind hier als stabförmige Bauelemente dargestellt. Die beiden Bauteile 1 und 2 sind in ihrer vorpositionierten Ausgangslage vor dem Fügen in Volllinien und in der zu erreichenden Soll-Lage gemäß dem oder den Lagemerkmalen in strichlierten Linien gezeigt. Als Lagemerkmal zwischen den beiden Bauteilen 1 und 2 im Bereich ihrer beiden Funktionsflächen 5, 6 wird hier einerseits der Abstand 10, die Parallelität der beiden Funktionsflächen 5, 6 zueinander sowie die Ebenheit bzw. die Geradheit der beiden Funktionsflächen 5, 6 angesehen.

Im linken Bereich der Darstellung der Fig. 3 ist ein Startpunkt 15 für den Beginn des Fügevorganges durch eine vertikale Linie dargestellt. Ausgehend von diesem Startpunkt 15 bzw. der Startlinie ist ein Pfeil nach rechts zeigend eingetragen, welcher einen Abstand 16 vom Startpunkt 15 bzw. der Startlinie kennzeichnet. Zwischen den einander zugewendeten Fügeflächen 8, 9 wird vor dem Fügen der Fügespalt 14 ausgebildet, der eine Spaltbreite 17 aufweist. Dabei wird die Spaltbreite 17 des Fügespaltes 14 über deren Längserstreckung zwischen den Fügeflächen 8, 9 in Abhängigkeit des als Sollwert definierten Lagemerkmals unterschiedlich gewählt. So nimmt hier die Spaltbreite 17 des Fügespaltes 14 zwischen den Fügeflächen 8, 9 ausgehend vom Startpunkt 15 des Fügevorganges mit sich vergrößerndem Abstand 16 vom Startpunkt 15 ständig zu. So kann auch von einer keilförmigen Ausbildung des Fügespaltes 14 gesprochen werden. Aufgrund des Fügevorganges und der durch die Schweißparameter eingebrachten Wärmeenergie erfolgt mit fortschreitendem Fügevorgang eine ständige Verkleinerung des Fügespaltes 14, wodurch nach Beenden des Fügevorganges die beiden Funktionsflächen 5, 6 die vorbestimmten Lagemerkmale erfüllen.

In der Fig. 4 ist eine weitere und gegebenenfalls für sich eigenständige Ausführungsform der Baueinheit 7 aus den beiden Bauteilen 1 und 2 gezeigt, wobei wiederum für gleiche Teile gleiche Bezugszeichen bzw. Bauteilbezeichnungen wie in den vorangegangen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Zur Ermittlung der geometrischen bzw. räumlichen Ausbildung der Bauteile 1, 2 ist es vorteilhaft, wenn diese vor dem Fügevorgang zumindest abschnittsweise im Bereich ihrer Funktionsfläche 5, 6 und/oder Fügeflächen 8, 9 geometrisch bzw. räumlich erfasst und vermessen werden. Durch diese geometrische bzw. räumliche Erfassung der beiden Bauteile 1, 2 können die relativen Lagen bzw. Positionen der Funktionsflächen 5, 6 sowie der Fügeflächen 8, 9 zueinander vorbestimmt werden und über Simulation der Fügespalt 14 ermittelt bzw. errechnet werden, welcher notwendig ist, um nach Beendigung des Fügevorganges die als Soll-Wert vorgegebenen Lagemerkmale durch die beiden Funktionsflächen 5, 6 zu erfüllen. Dadurch kann ein Regelkreis geschaffen werden, bei dem zuerst die geometrische bzw. räumliche Erfassung und die nachfolgende theoretische Positionierung zueinander festgelegt wird. Je nach ermittelter Abweichung der Istgeometrie der Bauteile 1, 2 von der Sollgeometrie können tabellarische Korrekturwerte für die zu wählende Spaltbreite 17 sowie der zu wählenden Schweißparameter ermittelt und festgelegt werden, um so wiederum zum Sollwert des oder der Lagemerkmale zu gelangen.

Dadurch ist es weiters möglich, in Abhängigkeit von der ermittelten Spaltbreite 17 des Fügespaltes 14 und der vorbestimmten Verbindungslänge zwischen den zu fügenden Bauteilen 1, 2 die Schweißparameter festzulegen und in Abhängigkeit von diesen den Fügevorgang durchzuführen. Dadurch wird wiederum nach Abschluss bzw. Beenden des Fügevorganges und der damit thermischen Beeinflussung der beiden Bauteile 1, 2 die exakte relative Lage der beiden Funktionsflächen 5, 6 zueinander erzielt.

Unabhängig davon wäre es aber auch möglich, die durch den thermischen Fügevorgang hervorgerufenen Verformungen der miteinander zu fügenden Bauteile 1, 2 auf unterschiedlichste Art und Weise zu ermitteln, um in Abhängigkeit von den ermittelten Verformungen die Funktionsflächen 5, 6 derart an den Bauteilen 1, 2 anzuordnen bzw. auszurichten, sodass wiederum nach Beenden des Fügevorganges der Sollwert des Lagemerkmals erreicht wird.

Dies bedeutet, dass die Funktionsfläche 5, 6 beispielsweise nur in ihrer Glätte bzw. Oberflächenrauheit endfertig hergestellt wird und sich die endgültige Lage bzw. Positionierung der Funktionsfläche 5, 6 erst nach dem Beenden des Fügevorganges einstellt. Dies bedeutet, dass eine absichtliche bzw. vorbestimmte Abweichung der geometrischen Form bzw. Lage der Funktionsfläche 5, 6 am Bauteil 1, 2 ausgebildet wird und sich mit fortschreitendem Fügevorgang sich durch die Fügeparameter die endgültige Positionierung bzw. Lage der Funktionsflächen 5, 6 an der Baueinheit 7 einstellt und so wiederum der oder die Sollwerte des oder der Lagemerkmale nach dem Beenden des Fügevorganges erreicht werden.

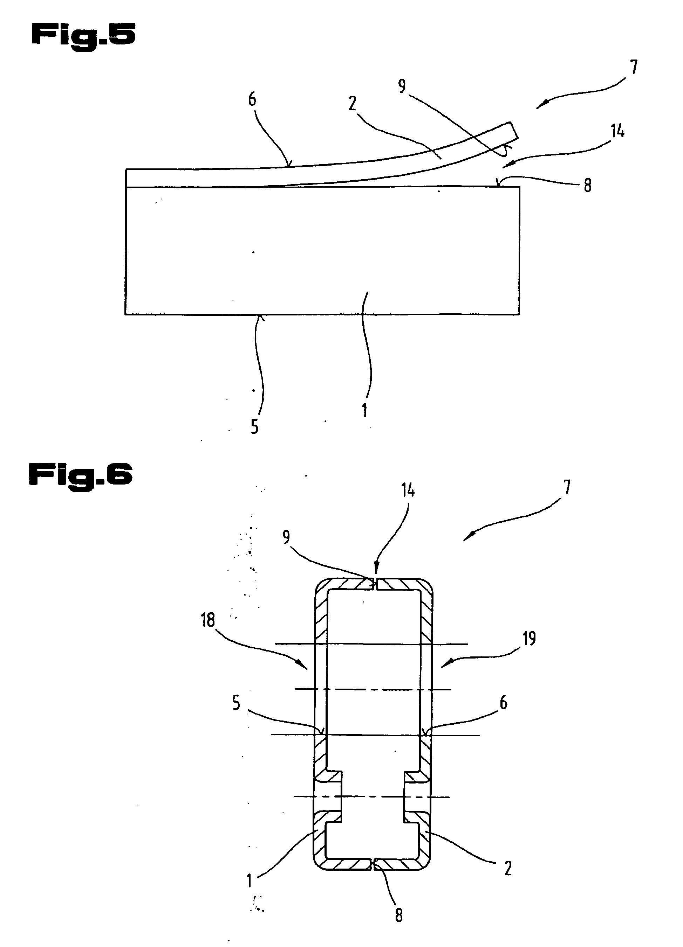

In der Fig. 5 ist eine weitere und gegebenenfalls für sich eigenständige Ausführungsform der Baueinheit 7 aus den beiden Bauteilen 1 und 2 gezeigt, wobei wiederum für gleiche Teile gleiche Bezugszeichen bzw. Bauteilbezeichnungen wie in den vorangegangen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

So wäre es dabei aber auch noch möglich, dass in zumindest einem der zu fügenden Bauteile 1, 2 vor dem Fügevorgang eine innere Spannung aufgebaut wird und diese während dem thermischen Fügevorgang in Abhängigkeit von den gewählten Schweißparametern reduziert oder wieder abgebaut wird. Diese inneren Spannungen könnten durch einen bewusst und vorbestimmt durchgeführten Verformungsvorgang, wie beispielsweise ein Umformen bzw. Verbiegen oder dgl. aufgebaut werden. Die inneren Spannungen werden durch die vorgewählten Schweißparameter und die damit in Zusammenhang stehenden Fügeparameter wieder reduziert oder aber auch soweit abgebaut, dass der oder die Bauteile 1, 2 nach Beenden des Fügevorganges überwiegend bzw. gänzlich spannungsfrei sind. Unter reduziert wird dabei verstanden, dass die bewusst vor dem Fügevorgang aufgebauten inneren Spannungen um einen gewissen Prozentsatz verkleinert werden. Dieser Prozentsatz kann ausgehend von 100 % der Spannungen vor dem Fügevorgang auch nur um wenige Prozent reduziert werden, um so schon eine Verbesserung gegenüber bislang bekannten Fügevorgängen zu erzielen. Damit kann dem Aufbau von inneren Spannungen durch den ansonst üblichen Schweißverzug entgegen gewirkt und so eine Qualitätsverbesserung der gesamten Bauteilgruppe erzielt werden.

Dabei ist der erste Bauteil 1 ein relativ festes massives Bauelement und der damit zu verbindende zweite Bauteil 2 ein dazu relativ dünnes bzw. schmales Bauelement. Durch die für den Fügevorgang eingestellten Schweißparameter lässt sich beispielsweise der Schweißverzug einfach vorbestimmen, wodurch wiederum an beiden Bauteilen 1, 2 die Funktionsflächen 5, 6 endfertig hergestellt bzw. ausgebildet werden und diese nach dem Beenden des Fügevorganges wiederum die als Sollwerte vorbestimmten Lagemerkmale erfüllen.

Dadurch, dass der erste Bauteil 1 relativ dick und massiv bezüglich des zweiten Bauteils 2 ausgebildet ist, wird eine überwiegende bzw. gänzliche Verformung des Bauteils 2 während dem Fügevorgang erfolgen. Zu diesem Zweck ist, wie zuvor beschrieben, der Bauteil 2 im Bereich seiner Funktionsfläche 6 endfertig bearbeitet. Die endgültige Position der beiden Funktionsflächen 5, 6 zueinander wird jedoch erst nach Beenden des Fügevorganges in Abhängigkeit von den Fügeparametern erzielt. Als Lagemerkmale könnten hier beispielsweise wiederum die Parallelität sowie der Abstand zwischen den beiden Funktionsflächen 5, 6 angesehen werden.

Zur Erzielung einer noch höheren Genauigkeit des oder der Lagemerkmale ist es vorteilhaft, wenn während dem Fügevorgang ein Soll/Istwertvergleich des oder der Lagemerkmale durchgeführt wird und bei Ermittlung einer Abweichung eine Korrektur von Spannparametern und/oder Schweißparametern durchgeführt wird.

Durch exakt vorbekannte Lagemerkmale können diese durch feinste Messmethoden unmittelbar während dem Fügevorgang ermittelt werden. So kann eine kurzfristigste Korrektur der Spann- und/oder Schweißparameter durchgeführt werden, um die Produktion von Ausschussteilen zu vermeiden. Dabei ist es vorteilhaft, wenn der Soll/Istwertvergleich des oder der Lagemerkmale während dem Fügevorgang simultan mit diesem durchgeführt wird.

Der Soll/Istwertvergleich könnte aber auch Beendigung des Fügevorganges durchgeführt werden und so erst eine Korrektur der Spann- und/oder Schweißparameter für die nächste herzustellende Baueinheit 7 aus den Bauteilen 1 und 2 erfolgen. Damit wird der Baueinheit 7 bei größerer Wärmeinbringung die Möglichkeit gegeben, gänzlich abzukühlen und so die tatsächlich erreichten Lagemerkmale endgültig exakt bestimmen zu können.

Weiters wäre es aber auch noch möglich, nach dem Fügevorgang die Baueinheit 7 einer Nachbehandlung, wie beispielsweise einem Spannungsfreiglühen, einer Ultraschallbehandlung oder dergleichen zu unterziehen. Durch diese zusätzliche Nachbehandlung wird nicht nur eine spannungsfreie bzw. spannungsarme Baueinheit 7 geschaffen, sondern es kann dadurch erst die exakte gegenseitige Positionierung bzw. Ausrichtung der Funktionsflächen 5, 6 relativ zueinander erreicht werden.

In der Fig. 6 ist eine weitere mögliche Anordnung von bereits gefügten Bauteilen 1, 2 zur Bildung der Baueinheit 7 gezeigt, wobei wiederum für gleiche Teile gleiche Bezugszeichen bzw. Bauteilbezeichnungen wie in den vorangegangen Fig. 1 bis 5 verwendet werden. Um unnötige Wiederholungen zu vermeiden, wird auf die detaillierte Beschreibung in den vorangegangenen Fig. 1 bis 5 hingewiesen bzw. Bezug genommen.

Die aus den beiden Bauteilen 1, 2 gebildete Baueinheit 7 kann beispielsweise aus feingestanzten Blechteilen gebildet werden, welche nach dem Feinstanzen zu C- bzw. U-förmigen Profilen umgeformt werden. Im Querschnitt sowie im gefügten Zustand bilden dann die beiden Bauteile 1 und 2 einen rohrförmigen Querschnitt aus, wobei die Bauteile 1, 2 in Richtung ihrer Längserstreckurig gesehen an den einander zugewendeten Fügeflächen 8, 9 miteinander verbunden werden. Diese Verbindung erfolgt wiederum unter der Maßgabe, dass zuerst die beiden Bauteile 1, 2 zur Erzielung der Lagemerkmale bezüglich der Funktionsflächen 5, 6 vorpositioniert ausgerichtet werden und so nach Beenden des Fügevorganges diese eingehalten werden.

Die beiden Funktionsflächen 5, 6 sind beispielsweise durch Ausnehmungen 18, 19 in den beiden Bauteilen 1, 2 gebildet. Die beiden Ausnehmungen 18, 19 sind an den gegenüberliegenden Seitenwänden angeordnet und können beispielsweise einen kreisförmigen Querschnitt aufweisen. Als Lagemerkmal kann hier die koaxiale Ausrichtung der Ausnehmungen 18, 19 zueinander bezüglich einer gemeinsamen Mittelachse angesehen werden:

Weiters ist noch in der unteren Hälfte der Fig. 6 dargestellt, dass in den beiden Seitenwänden der Bauteile 1, 2 weitere umgeformte Elemente angeordnet bzw. ausgebildet sind, welche beispielsweise zur Aufnahme von Befestigungsmitteln wie Schrauben, Nieten usw. dienen können. Das Lagemerkmal könnte hier die Konzentrizität der beiden aufeinander zugerichteten und umgeformten Elemente sein.

Zwischen den beiden einander zugewendeten Fügeflächen 8, 9 wird der Fügespalt 14 ausgebildet. Dieser ermöglicht einerseits die Ausrichtung der beiden Ausnehmungen 18, 19 mit deren Funktionsflächen 5, 6 zueinander, wobei überdies noch ein weiteres Lagemerkmal der äußere Abstand der Seitenflächen zueinander und somit die Stärke bzw. Dicke der aus den beiden Bauteilen 1, 2 zusammengesetzten Baueinheit 7 gelten kann.

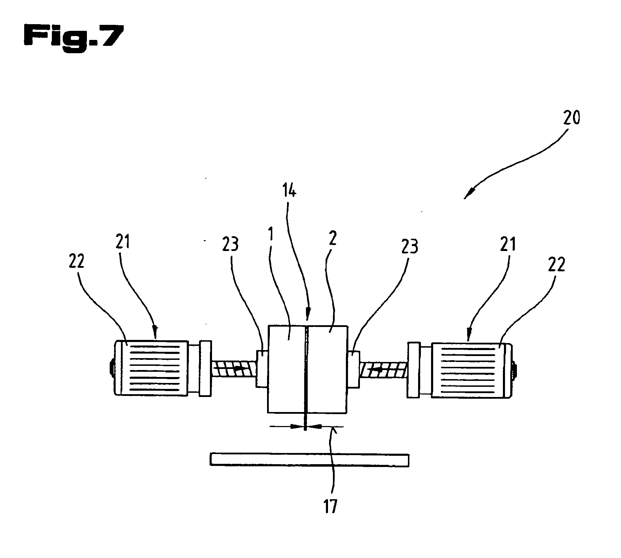

In der Fig. 7 ist eine mögliche Anordnung zum Spannen und Fügen von Bauteilen 1, 2 zur Bildung der Baueinheit 7 gezeigt, wobei wiederum für gleiche Teile gleiche Bezugszeichen bzw. Bauteilbezeichnungen wie in den vorangegangen Fig. 1 bis 6 verwendet werden. Um unnötige Wiederholungen zu vermeiden, wird auf die detaillierte Beschreibung in den vorangegangenen Fig. 1 bis 6 hingewiesen bzw. Bezug genommen.

Eine vereinfacht dargestellte Spannvorrichtung 20 umfasst zumindest eine verstellbar ausgebildete Spanneinheit 21, mit der die Bauteile 1, 2 in ihrer Lage zueinander vorpositioniert gehalten und für den Fügevorgang fixiert werden. Zumeist werden jedoch mehrere dieser Spanneinheiten 21 eingesetzt, wodurch eine zentrische bzw. mittige Spannebene bezüglich einer schematisch vereinfacht dargestellten Fördervorrichtung erreicht wird. Die Spanneinheit 21 kann einen Servomotor 22 umfassen, welcher mit zumindest einem Spannwerkzeug 23 in Verbindung steht. Von einer hier ebenfalls nicht näher dargestellten Auswerteeinheit werden die von den Servomotoren 22, welche z.B. durch Elektromotoren gebildet sein können, ausgeübten Drehmomente erfasst und daraus die aktuellen Istwerte der Spannkraft und/oder des Verfahr- und Spannweges ermittelt und mit Sollwerten verglichen. Damit kann eine Qualitätsbeurteilung der einzelnen Teile durchgeführt werden. Aufgrund dieser Beurteilung kann der Fügespalt 14 und in weiterer Folge seine Spaltbreite 17 ermittelt und für den Fügevorgang durch die Spanneinheiten 21 bzw. weiterer Stellelemente eingestellt werden.

Dabei wird von jedem der Servomotoren 22 der Spanneinheiten 21 das ausgeübte Drehmoment bzw. der Motorstrom erfasst, einer Steuereinrichtung und/oder Auswerteeinheit gemeldet und daraus eine Spannkraft und/oder ein Verfahr- und/oder Spannweg jeder einzelnen Spannvorrichtung 20 mit deren Spanneinheiten 21 ermittelt.

Die Istwerte der Spannkräfte werden aus den ausgeübten Drehmomenten bzw. dem Motorstrom der bevorzugt stufenlos steuerbaren Elektromotoren der Spanneinheiten 21 vorzugsweise laufend ermittelt und der elektronischen Auswerteinheit gemeldet sowie in dieser ein Soll-Istwert-Vergleich der Spannkräfte durchgeführt.

Die zumeist stufenlos steuerbaren Elektromotoren, insbesondere Servomotoren 22, sind mit der Auswerteeinheit verbunden, die zum Erfassen der Spannkraft und/oder des Verfahr- und Spannweges ausgeführt ist, anhand der bzw. dem eine Produktionsüberwachung möglich ist.

Die Ausführungsbeispiele zeigen mögliche Ausführungsvarianten von miteinander gefügten Bauteilen nach dem erfindungsgemäßen Verfahren, wobei an dieser Stelle bemerkt sei, dass die Erfindung nicht auf die speziell dargestellten Ausführungsvarianten derselben eingeschränkt ist, sondern durch den Schutzumfang der Ansprüche definiert ist.

Der Ordnung halber sei abschließend darauf hingewiesen, dass zum besseren Verständnis des Fügevorganges die miteinander gefügten Bauteile diese bzw. deren Bestandteile teilweise unmaßstäblich und/oder vergrößert und/oder verkleinert dargestellt wurden.

### Bezugszeichenaufstellung

- 1: Bauteil
- 2: Bauteil
- 3: Längsachse
- 4: Längsachse
- 5: Funktionsfläche

- 6: Funktionsfläche
- 7: Baueinheit
- 8: Fügefläche
- 9: Fügefläche
- 10: Abstand

- 11: Winkel
- 12: Erzeugende
- 13: Abstand
- 14: Fügespalt
- 15: Startpunkt

- 16: Abstand
- 17: Spaltbreite
- 18: Ausnehmung
- 19: Ausnehmung

## Patentansprüche

1. Verfahren zum thermischen Fügen, insbesondere Laserschweißen, von zwei Bauteilen (1, 2), bei dem an beiden Bauteilen (1, 2) vor dem Fügevorgang jeweils Funktionsflächen (5, 6) zumindest bezüglich ihrer Oberflächengüte in Abschnitten überwiegend endfertig hergestellt werden, anschließend die beiden Bauteile (1, 2) zueinander positioniert und dann an einander zugewendeten Fügeflächen (8, 9) miteinander verbunden werden, **dadurch gekennzeichnet, dass** zunächst ein Lagemerkmal zwischen den an den Bauteilen (1, 2) ausgebildeten Funktionsflächen (5, 6) unter Berücksichtigung eines Fügeparameters als Sollwert definiert wird und danach ein Fügespalt (14) mit einer Breite größer Null zwischen den einander zugewendeten Fügeflächen (8, 9) der zu fügenden Bauteile (1, 2) in Abhängigkeit des Lagemerkmals eingestellt wird, sodass der Sollwert des Lagemerkmals nach dem Beenden des Fügevorganges erreicht wird.

2. Verfahren nach Anspruch 1, **dadurch gekennzeichnet, dass** die Herstellung und die damit verbundene geometrische Anordnung der überwiegend endfertig bearbeiteten Funktionsfläche (5, 6) in Abhängigkeit bezüglich der geometrischen Anordnung der jeweiligen Fügefläche (8, 9) des Bauteils (1, 2) durchgeführt werden.

3. Verfahren nach Anspruch 1 oder 2, **dadurch gekennzeichnet, dass** in Abhängigkeit der geometrischen Anordnung der am Bauteil (1, 2) überwiegend endfertig bearbeiteten Funktionsfläche (5, 6) die jeweilige Fügefläche (8, 9) am Bauteil (1, 2) hergestellt wird.

4. Verfahren nach einem der vorhergehenden Ansprüche, **dadurch gekennzeichnet, dass** vor dem Fügen der Bauteile (1, 2) der Fügespalt (14) mit einer Spaltbreite (17) ausgebildet wird, welche zumindest jenem Positionierweg entspricht, bei welchem die Funktionsflächen (5, 6) in ihrer Lage zueinander vorpositioniert sind.

5. Verfahren nach Anspruch 4, **dadurch gekennzeichnet, dass** die Spaltbreite (17) des Fügespaltes (14) im Zuge des Spannvorganges der Bauteile (1, 2) eingestellt wird.

6. Verfahren nach Anspruch 5, **dadurch gekennzeichnet, dass** die Spaltbreite (17) des Fügespaltes (14) im Zuge des fortschreitenden Fügevorganges laufend nacheingestellt wird.

7. Verfahren nach einem der Ansprüche 4 bis 6, **dadurch gekennzeichnet, dass** vor dem Fügen der Bauteile (1, 2) die Spaltbreite (17) des Fügespaltes (14) über deren Längserstreckung zwischen den Fügeflächen (8, 9) in Abhängigkeit des als Sollwert definierten Lagemerkmals unterschiedlich gewählt wird.

8. Verfahren nach einem der Ansprüche 4 bis 7, **dadurch gekennzeichnet, dass** die Spaltbreite (17) des Fügespaltes (14) zwischen den Fügeflächen (8, 9) ausgehend von einem Startpunkt (15) des Fügevorganges mit sich vergrößerndem Abstand (16) von diesem Startpunkt (15) zunehmend ausgebildet wird.

9. Verfahren nach einem der vorhergehenden Ansprüche, **dadurch gekennzeichnet, dass** die miteinander zu fügenden Bauteile (1, 2) vor dem Fügevorgang zumindest abschnittsweise im Bereich ihrer Funktionsflächen (5, 6) und/oder Fügeflächen (8, 9) geometrisch erfasst und vermessen werden.

10. Verfahren nach Anspruch 9, **dadurch gekennzeichnet, dass** in Abhängigkeit von der ermittelten Spaltbreite (17) des Fügespaltes (14) und der vorbestimmten Verbindungslänge zwischen den zu fügenden Bauteilen (1, 2) die Schweißparameter ermittelt sowie festgelegt werden und in Abhängigkeit von diesen der Fügevorgang durchgeführt wird.

11. Verfahren nach Anspruch 8 oder 9, **dadurch gekennzeichnet, dass** in Abhängigkeit von der ermittelten Spaltbreite (17) des Fügespaltes (14) und der vorbestimmten Verbindungslänge zwischen den zu fügenden Bauteilen (1, 2) vor dem Fügevorgang Spannparameter für die relative gegenseitige Fixierung der Bauteile (1, 2) zueinander ermittelt und festgelegt werden und nach der vorpositionierten Halterung der Bauteile (1, 2) der Fügevorgang durchgeführt wird.

12. Verfahren nach einem der vorhergehenden Ansprüche, **dadurch gekennzeichnet, dass** die durch den thermischen Fügevorgang hervorgerufenen Verformungen der miteinander zu fügenden Bauteile (1, 2) ermittelt werden und in Abhängigkeit von den ermittelten Verformungen die Funktionsflächen (5, 6) derart an den Bauteilen (1, 2) ausgerichtet werden, sodass nach dem Beenden des Fügevorganges der Sollwert des Lagemerkmals erreicht wird.

13. Verfahren nach einem der vorhergehenden Ansprüche, **dadurch gekennzeichnet, dass** in zumindest einem der zu fügenden Bauteil (1, 2) vor dem Fügevorgang eine innere Spannung aufgebaut wird und diese während dem thermischen Fügevorgang in Abhängigkeit von den gewählten Schweißparametern reduziert oder wieder abgebaut wird.

14. Verfahren nach einem der vorhergehenden Ansprüche, **dadurch gekennzeichnet, dass** während dem Fügevorgang ein Soll/Istwertvergleich des Lagemerkmals durchgeführt wird und bei Ermittlung von Abweichungen eine Korrektur der Spannparameter und/oder Schweißparameter durchgeführt wird.

15. Verfahren nach Anspruch 14, **dadurch gekennzeichnet, dass** der Soll/Istwertvergleich des Lagemerkmals während dem Fügevorgang simultan durchgeführt wird.

## Claims

1. Method for thermally joining, in particular laser welding, two components (1, 2), where prior to the joining operation on both components functional surfaces (5, 6) that are predominantly finished in sections at least with respect to the surface finishes thereof are produced, subsequently the two components (1, 2) are positioned relative to each other, and then connected to each other on mutually facing joining surfaces (8, 9), **characterized in that** to begin with, a position characteristic is defined as a target value between the functional surfaces (5, 6) configured on the components (1, 2) while taking a joining parameter into consideration and then, a joining gap (14) having a width greater than zero is set between the mutually facing joining surfaces (8, 9) of the components (1, 2) to be joined, as a function of the position characteristic, so that the target value of the position characteristic is achieved after completing the joining operation.

2. Method according to claim 1, **characterized in that** the production and the thereto connected geometric arrangement of the functional surface (5, 6) processed predominantly finally finished are carried out as a function of the geometric arrangement of the respective joining surface (5, 6) of the component (1, 2).

3. Method according to claim 1 or 2, **characterized in that** the respective joining surface (8, 9) is produced on the component (1, 2) as a function of the geometric arrangement of the function surface (5, 6) that is processed predominantly finally finished on the component (1,2).

4. Method according to one of the preceding claims, **characterized in that** prior to the joining of the components (1, 2) the joining gap (14) is embodied to have a gap width (17) corresponding to at least that positioning path at which the positioning surfaces (5, 6) are prepositioned relative to each other with respect to their position.

5. Method according to claim 4, **characterized in that** the gap width (17) of the joining gap (14) is set within the course of the clamping process of the components (1, 2).

6. Method according to claim 5, **characterized in that** the gap width (17) of the joining gap (14) is continuously readjusted within the course of the progressing joining process.

7. Method according to one of claims 4 to 6, **characterized in that** prior to the joining of the components (1, 2) the gap width (17) of the joining gap (14) across their longitudinal extension between the joining surfaces (8, 9) is differently selected as a function of the positioning characteristic defined as a target value.

8. Method according to one of claims 4 to 7, **characterized in that** the gap width (17) of the joining gap (14) between the joining surfaces (8, 9) is embodied to increase beginning at a starting point (15) of the joining operation at increasing distance (16) from said starting point (15).

9. Method according to one of the preceding claims, **characterized in that** at least sections of the components (1, 2) to be joined to one another are geometrically captured and measured in the region of their functional surfaces (5, 6) and/or joining surfaces (8, 9) prior to the joining operation.

10. Method according to claim 9, **characterized in that** depending on the gap width (17) of the joining gap (14) detected and the predetermined length of connection between the components (1, 2) to be joined, the welding parameters are detected as well as set and the joining operation is carried out as a function of the latter.

11. Method according to claim 8 or 9, **characterized in that** as a function of the gap width (17) of the joining gap (14) detected and the predetermined length of connection between the components (1, 2) to be joined, clamping parameters for the relative mutual fixation of the components (1, 2) to one another are detected and set prior to the joining operation and the joining operation is carried out after the prepositioned holding of the components (1,2).

12. Method according to one of the preceding claims, **characterized in that** the deformations of the components (1, 2) to be joined caused by the thermal joining operation are detected and the functional surfaces (5, 6) are adjusted to the components (1, 2) as a function of the deformations detected in such a way that the target value of the positioning characteristic is achieved after completing the joining operation.

13. Method according to one of the preceding claims, **characterized in that** in at least one of the components (1, 2) to be joined an inner tension is established prior to the joining operation and this tension is reduced or removed during the thermal joining operation as a function of the selected welding parameters.

14. Method according to one of the preceding claims, **characterized in that** a target/actual comparison of the positioning characteristic is carried out during the joining operation and when differences are detected, the clamping and/or welding parameters are corrected.

15. Method according to claim 14, **characterized in that** the target/actual comparison of the positioning characteristic is carried out simultaneously to the joining operation.

## Revendications

1. Procédé pour l'assemblage thermique, en particulier le soudage au laser, de deux composants (1, 2), dans lequel pour les deux composants (1, 2), des faces fonctionnelles (5, 6) sont réalisées de façon essentiellement finie par sections, au moins en ce qui concerne la qualité de leur surface, avant le processus d'assemblage, puis les deux composants (1, 2) sont positionnés l'un par rapport à l'autre et reliés ensuite l'un à l'autre au niveau de faces d'assemblage (8, 9) tournées l'une vers l'autre, **caractérisé en ce qu'**un repère de position est d'abord défini entre les faces fonctionnelles (5, 6) réalisées sur les composants (1, 2) en prenant en considération un paramètre d'assemblage comme valeur de consigne et un joint d'assemblage (14) ayant une largeur d'une dimension nulle est réglé entre les faces d'assemblage (8, 9) tournées l'une vers l'autre des composants (1, 2) devant être assemblés en fonction du repère de position de telle sorte que la valeur de consigne du repère de position est atteinte au terme du processus d'assemblage.

2. Procédé selon la revendication 1, **caractérisé en ce que** la réalisation et l'agencement géométrique connexe de la face fonctionnelle (5, 6) traitée de façon essentiellement finie sont exécutés en fonction de l'agencement géométrique de la face d'assemblage (8, 9) respective du composant (1, 2).

3. Procédé selon la revendication 1 ou 2, **caractérisé en ce que** la face d'assemblage (8, 9) respective est réalisée sur le composant (1, 2) en fonction de l'agencement géométrique de la face fonctionnelle (5, 6) traitée de façon essentiellement finie sur le composant (1, 2).

4. Procédé selon l'une des revendications précédentes, **caractérisé en ce qu'**avant l'assemblage des composants (1, 2), le joint d'assemblage (14) est formé avec une largeur de joint (17) qui correspond au moins à la distance de positionnement à laquelle les faces fonctionnelles (5, 6) sont positionnées préalablement l'une par rapport à l'autre dans leur position.

5. Procédé selon la revendication 4, **caractérisé en ce que** la largeur de joint (17) du joint d'assemblage (14) est réglée dans le cadre du processus de tension des composants (1, 2).

6. Procédé selon la revendication 5, **caractérisé en ce que** la largeur de joint (17) du joint d'assemblage (14) est réglée ultérieurement en permanence dans le cadre de la poursuite du processus d'assemblage.

7. Procédé selon l'une des revendications 4 à 6, **caractérisé en ce qu'**avant l'assemblage des composants (1, 2), la largeur de joint (17) du joint d'assemblage (14) par rapport à son extension longitudinale entre les faces d'assemblage (8, 9) est choisie différemment en fonction du repère de position défini comme valeur de consigne.

8. Procédé selon l'une des revendications 4 à 7, **caractérisé en ce que** la largeur de joint (17) du joint d'assemblage (14) entre les faces d'assemblage (8, 9) est formée de façon croissante à partir d'un point de départ (15) du processus d'assemblage avec une distance (16) qui augmente depuis ce point de départ (15).

9. Procédé selon l'une des revendications précédentes, **caractérisé en ce que** les composants (1, 2) qui doivent être assemblés l'un avec l'autre sont détectés et mesurés géométriquement avant le processus d'assemblage, au moins par sections, dans la zone de leurs faces fonctionnelles (5, 6) et/ou de leurs faces d'assemblage (8, 9).

10. Procédé selon la revendication 9, **caractérisé en ce que** les paramètres de soudage sont calculés et fixés en fonction de la largeur de joint (17) déterminée du joint d'assemblage (14) et de la longueur de jonction prédéterminée entre les composants (1, 2) qui doivent être assemblés et le processus d'assemblage est exécuté en fonction de ces paramètres.

11. Procédé selon la revendication 8 ou 9, **caractérisé en ce que** des paramètres de tension sont calculés et fixés avant le processus d'assemblage pour la fixation réciproque des composants (1, 2) l'un par rapport à l'autre en fonction de la largeur de joint (17) déterminée du joint d'assemblage (14) et de la longueur de jonction prédéterminée entre les composants (1, 2) qui doivent être assemblés et le processus d'assemblage est exécuté après le montage des composants (1, 2) dans la position déterminée préalablement.

12. Procédé selon l'une des revendications précédentes, **caractérisé en ce que** les déformations des composants (1, 2) qui doivent être assemblés l'un avec l'autre provoquées par le processus d'assemblage thermique sont calculées et les faces fonctionnelles (5, 6) sont orientées de telle sorte sur les composants (1, 2) en fonction des déformations calculées que la valeur de consigne du repère de position est atteinte au terme du processus d'assemblage.

13. Procédé selon l'une des revendications précédentes, **caractérisé en ce que** dans au moins un des composants (1, 2) qui doivent être assemblés, une tension interne est créée avant le processus d'assemblage et cette tension est réduite ou supprimée ensuite pendant le processus d'assemblage thermique en fonction des paramètres de soudage choisis.

14. Procédé selon l'une des revendications précédentes, **caractérisé en ce que** pendant le processus d'assemblage, une comparaison de la valeur de consigne et de la valeur effective du repère de position est exécutée, et si des déviations sont détectées, une correction des paramètres de tension et/ou des paramètres de soudage est exécutée.

15. Procédé selon la revendication 14, **caractérisé en ce que** la comparaison de la valeur de consigne et de la valeur effective du repère de position est exécutée simultanément pendant le processus d'assemblage.
